Europäisches Patentamt

European Patent Office

Office européen des brevets

(19)

(11) Veröffentlichungsnummer : **0 168 767**
B1

(12) **EUROPÄISCHE PATENTSCHRIFT**

(45) Veröffentlichungstag der Patentschrift :
17.05.89

(51) Int. Cl.⁴ : **F 16 F 9/04**, B 60 K 5/12,
G 10 K 11/16

(21) Anmeldenummer : 85108583.7

(22) Anmeldetag : 10.07.85

(54) Federkörper für die Dämpfung von Schwingungen.

(30) Priorität : 14.07.84 DE 3426028

(43) Veröffentlichungstag der Anmeldung :
22.01.86 Patentblatt 86/04

(45) Bekanntmachung des Hinweises auf · die Patenterteilung : 17.05.89 Patentblatt 89/20

(84) Benannte Vertragsstaaten :
DE FR GB IT

(56) Entgegenhaltungen :
DE—B— 1 125 781
DE—C— 696 354
FR—A— 2 154 642
US—A— 3 836 134
"Seismic mountings for vibration isolation", Joseph
A. Macinante, Seite 106

(73) Patentinhaber : **METZELER Gesellschaft mit beschränkter Haftung**
**Gneisenaustrasse 15**
**D-8000 München 50 (DE)**

(72) Erfinder : **Härtel, Volker, Dr.**
**Fichtenstrasse 50**
**D-8034 Germering (DE)**

(74) Vertreter : **Michelis, Theodor, Dipl.-Ing.**
**Gneisenaustrasse 15**
**D-8000 München 50 (DE)**

## Beschreibung

Die Erfindung bezieht sich auf einen Federkörper für die Dämpfung von Schwingungen, insbesondere zur Lagerung von Maschinen, mit einem verformbaren, mit Luft gefüllten Hohlkörper und mit einer durch ein Ventil verschließbaren Füllöffnung.

Ein solcher Federkörper kann insbesondere für die Dämpfung oder Schalldämmung von Hubkolbenmotoren verwendet werden, wie sie in Kraftfahrzeugen eingesetzt werden.

Derartige Federkörper sind beispielsweise aus dem Buch « seismic Mountings for Vibration Isolation, J. A. Macinante, Seite 106 » sowie aus der US-A 3.836.143 bekannt. Solche Federkörper, die auch als Luftfederbälge bezeichnet werden, haben im allgemeinen aber nahezu lineare Kennlinien und verhalten sich bezüglich der Schwingungsisolierung und im niederfrequenten akustischen Bereich ähnlich wie eine Stahlfeder oder eine schwachgedämpfte Gummifeder. Um einen hohen akustischen Isolationsgrad zu erreichen, ist es bei allen diesen Federelementen notwendig, eine große statische Einfederung vorzusehen, die in vielen Anwendungsfällen, wie beispielsweise bei der Lagerung eines Motors, nicht tolerierbar ist. Insgsamt ergeben sich mit derartigen Luftfedern Federkennlinien mit einem relativ flach ansteigenden Ast für den Bereich der eigentlichen Luftfederung, was eine hohe statische Einfederung beinhaltet, und einen anschließend steil ansteigenden Ast, wenn nur noch die Gummiteile als Federn wirken.

Weitere bekannte Federkörper, die sogenannten Rollbälge, haben zwar eine stark ausgeprägte s-förmige Kennlinie und damit die für viele Anwendungen in der Motorlagerung erwünschte geringe Steifigkeit bei vergleichsweise niedrigen Einfederungen. Ein Nachteil derartiger Ausführungen von Luftfedern ist jedoch die geringe Quersteifigkeit, d. h. man benötigt im allgemeinen Führungselemente, um ein seitliches Auswandern der zu isolierenden Masse bei Querbeschleunigungen oder Querkräften zu verhindern. Darüber hinaus haben derartige Luftfedern nur eine sehr geringe Dämpfung, die bei den meisten Anwendungen einen zusätzlichen Dämpfer erforderlich macht.

Demgegenüber liegt der vorliegenden Erfindung die Aufgabe zugrunde, einen Federkörper zu schaffen, der im Arbeitsbereich eine vergleichsweise geringe statische Einfederung und eine sehr niedrige dynamische Federrate aufweist. Darüber hinaus soll der mechanische Verlustwinkel als Maß der Dämpfung in der Mindestgrößenordnung von niedrig bis mittel dämpfenden Gummiqualitäten, also bei mindestens etwa 5°, liegen, um eine zusätzliche Dämpfung zur Reduzierung der Resonanzüberhöhungen überflüssig zu machen.

Zur Lösung dieser Aufgabe ist erfindungsgemäß vorgesehen, daß der Hohlkörper aus einem, mit elastomeren Material luftdicht beschichteten und an den Rändern verschlossenen Doppelgewebe mit planparallelem Ober- und Untergewebe besteht, dessen horizontale Erstreckung ein Mehrfaches seiner axialen Höhe beträgt und der im aufgeblasenen Zustand eine Lateralsteifigkeit in der Größenordnung der Axialsteifigkeit aufweist und daß auf der Oberseite und/oder Unterseite mindestens eine Metallplatte vorgebbaren Größenverhältnisses zur Hohlkörperfläche als Verbundelement zur Maschine und/oder Fundament aufvulkanisiert sind.

Zweckmäßige Ausgestaltungen der Erfindung sind in den Unteransprüchen genannt.

Die mit der Erfindung erzielten Vorteile beruhen auf folgenden Überlegungen : Ein Federkörper aus einem solchen, mit elastomerem Material beschichteten Doppel-oder Polgewebe, wie es im Prinzip aus der DE-AS 21 48 401 bekannt ist, hat bei der erfindungsgemäßen konstruktiven Auslegung eine ausgeprägte S-förmige Kraftverformungskennlinie, deren Neigung bei der statischen Einfederung im Arbeitspunkt relativ gering ist.

Während bei herkömmlichen Gummifederelementen wegen ihrer linearen Kennlinie die dynamische Steifigkeit je nach Werkstoff Werkstoffdämpfung und Frequenz das 1,2 bis 2-fache der statischen Steifigkeit beträgt, können mit solchen Federkorpern aus gummibeschichtetem Doppelgewebe dynamische Steifigeiten realisiert werden, die je nach Wahl des Arbeitspunktes um den Faktor 10 bis 15 unter der statischen Nennsteifigkeit $\Delta F/\Delta S$ liegen. Diese statische Steifigkeit ergibt sich als eine Steigung der Sekante $\Delta F/\Delta S$, letztlich also aus der statischen Belastung und dem zugehörigen Federweg und sollte bei typischen PKW-Motorlagerungen einen Grenzwert von 6 bis 8 mm nicht überschreiten, damit nicht zu große Triebwerksbewegungen auftreten können.

Durch Multiplikation mit der dynamischen Verhärtung ergibt sich, wie ausgeführt, die dynamische Steifigkeit.

Durch den neuen Federkörper lassen sich dynamische Steifigkeiten realisieren, die erheblich geringer sind und damit zu einer hervorragenden akustischen Isolation beitragen, die sich normalerweise nur mit Motorlagern erreichen läßt, bei denen die statische Einfederung mindestens 20 bis 30 mm beträgt.

Der neue Federkörper hat einen sehr einfachen Aufbau und läßt sich als flächiges Bauelement ausführen, indem ein Doppelgewebe, bspw. auf der Basis von Polyester, mit einem elastomeren Material, bspw. Gummi, beschichtet und an den Rändern luftdicht zusammenvulkanisiert ist. Für die Beschichtung kommen insbesondere Dien-, EPDM-, Butyl-oder Naturkautschuk in Frage.

Die Befüllung dieses Federkörpers erfolgt, etwa wie bei einem Lufreifen, über ein Ventil. Als Verbindungselemente zur Karosserie einerseits bzw. zum Motor andererseits dienen Metallplatten mit Bolzen oder anderen Befestigungselementen ; diese Metallplatten können an den Federkörper durch Verbindungstechniken anvulkanisiert werden, wie sie für Gummi- Metall-Verbindungen üblich sind.

Die Federsteifigkeit und das Verhältnis der Kennliniensteigungen wird durch den Durchmesser des tellerförmigen Auflagers, den Innendruck des Federkörpers und die Steifigkeit der Gummi-Gewebe-Deckschicht bestimmt. Der Federkörper läßt sich durch Aufblasen auf bestimmte, gegebenenfalls unterschiedliche Drücke leicht an unterschiedliche Lasten anpassen und behält seine Kennliniencharakteristik im wesentlichen bei.

Die Verwendung eines Doppelgewebes hat zwei wesentliche Vorteile :

a) die Verbindungsfäden bilden einen sehr wirksamen inneren Anschlag bei auftretenden Zugbelastungen, und

b) die Verbindungsfäden sorgen für eine hohe Dimensionsstabilität des Federkörpers und stellen derzeit eine optimale Technik für die Herstellung eines großflächigen Hohlkörpers dar, dessen Deckflächen exakt parallel zueinander verlaufen.

Bei einer weiteren Ausführungsform eines solchen Federkörpers ist es denkbar, ein solchen flächiges Lagerelement in der Weise zu gestalten, daß das Luftkissen also der Hohlkörper etwa die Größe der zu tragenden Motorstruktur hat und mit mehreren Auflagerpunkten versehen ist. Eine solche Ausführungsform hat den Vorteil, daß sie die gegenphasigen Bewegungen an den einzelnen Auflagerpunkten kompensiert und trotzdem alle Schwingungsbewegungen sehr weich aufnimmt.

Zweckmäßigerweise wird in den Hohlkörper ein in Druckrichtung wirkender Anschlag integriert ; dies kann dadurch erreicht werden, daß entweder in dem Hohlkörper ein Anschlagpuffer aus festem Gummi und/oder Moosgummi eingebaut oder das tellerförmige Auflager mit einem Ring versehen ist, der einen größeren Durchmesser als die Kontaktfläche/Auflager/Hohlkörper hat. Dieser Ring legt sich beim Einfedern erst nach einem bestimmten, vorgegebenen Federweg auf die Oberfläche des Hohlkörpers auf und bewirkt dort zunächst wieder eine Verformung im steilen Bereich der Kennlinie.

Die Erfindung wird im folgenden anhand von Ausführungsbeispielen unter Bezugnahme auf die beiligenden, schematischen Zeichnungen näher erläutert. Es zeigen

Fig. 1 eine perspektivische Ansicht einer ersten Ausführungsform eines Hohlkörpers,

Fig. 2 eine perspektivische Ansicht einer zweiten Ausführungsform des Hohlkörpers,

Fig. 3 einen Schnitt durch einen Hohlkörper mit einer ersten Ausführungsform eines Anschlags,

Fig. 4 einen Schnitt durch einen Hohlkörper mit einer zweiten Ausführungsform eines Anschlags,

Fig. 5 die statische Kraft/Weg-Kennlinie eines Federkörpers bei unterschiedlichen Fülldrücken, und

Fig. 6 die statische Kraft/Weg-Kennlinie eines Federkörpers mit einem Anschlag nach Fig. 3 für verschiedene Fülldrücke.

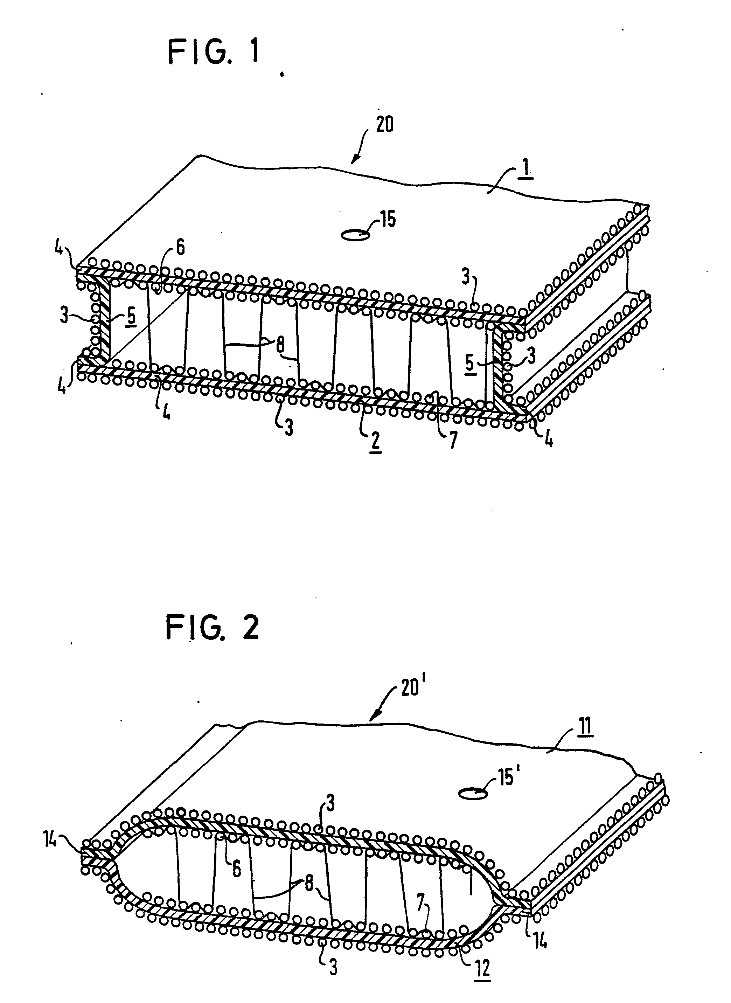

Der aus Fig. 1 ersichtliche, allgemein durch das Bezugszeichen 20 angedeutete Hohlkörper weist eine Oberbahn 1 und eine unterbahn 2 auf, von denen sich jede wiederum aus einem Gewebe 3 (gezeigt sind nur dessen angeschnittene Kettfäden) und einer unterseitigen, gas- und flüssigkeitsdichten Beschichtung 4 aus einem elastomeren Material, insbesondere Gummi, zusammensetzt. Seitlich ist die Oberbahn 1 mit der Unterbahn 2 über Randteile 5 verbunden, die ebenfalls aus dem Gewebe 3 mit der Beschichtung 4 bestehen.

Im Inneren dieses Hohlkörpers 20 ist zwischen den beiden Beschichtungen 4 ein Doppelgewebe eingebracht, das aus einer oberen und unteren Gewebebahn 6 und 7 sowie diese verbindenden Polfäden 8 besteht. Die Polfäden 8 sind in die Gewebeschichten 6 und 7 eingewebt oder eingeflochten. Die Gewebeschichten 6 und 7 können mit der Beschichtung 4 durch Kleben, Schweißen und/oder Vulkanisation verbunden sein.

Der Hohlkörper 20′ nach Fig. 2 ist ähnlich aufgebaut wie der Hohlkörper 20 nach Fig. 1 ; es fehlen · jedoch die Randeinsätze 5. Stattdessen wird die Oberbahn 11 in ihrem Randbereich direkt durch Verkleben und/oder Vulkanisieren der Beschichtungen 14 über eine Bartnaht mit der Unterbahn 12 verbunden.

Im Innern von Oberbahn 11 und Unterbahn 12 ist auf die beschriebene Weise ein Doppelgewebe 6, 7, 8 angeordnet, das im gefüllten Zustand des Hohlkörpers dessen Formen bestimmt. Auch hier sind wieder nur die Kettfäden des Gewebes gezeigt.

Als Alternative zu den dargestellten Ausführungsformen des Hohlkörpers 20 bzw. 20′ kann auch auf die Oberbahn 1, 11 und die Unterbahn 2, 12 verzichtet werden, d. h., das Doppelgewebe wird nur gas- und flüssigkeitsdicht mit der Schicht aus dem elastomeren Material, bspw. Gummi, versehen.

In den Fig. 1 und 2 ist außerdem eine Einfüllöffnung 15, 15′ dargestellt, die durch ein Ventil, bspw. ein Reifenventil, verschlossen werden kann.

Die Gewebebahnen einschließlich des Doppelgewebes können aus polyester bestehen und sind mit Gummi aus DIEN-, EPDM-, Butyl oder Naturkautschuk beschichtet.

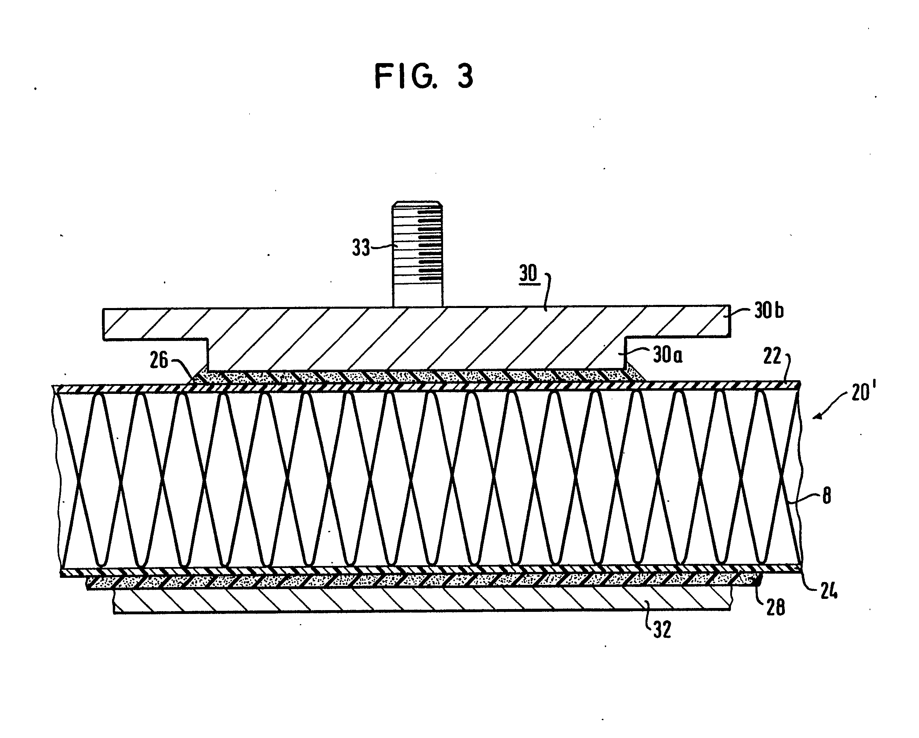

Fig. 3 zeigt einen vertikalen Schnitt durch einen Hohlkörper 20′, dessen Oberseite 22 und Unterseite 24 über eine Verbindungsschicht 26 bzw. 28 mit Metallplatten 30 bzw. 32 verbunden sind. Die untere Metallplatte 32 stützt sich auf der Karosserie eines Kraftfahrzeuges ab, während die obere Metallplatte 30 über einen Bolzen 33 mit dem Motor des Kraftfahrzeuges verbunden ist.

Die obere Metallplatte 30 ist als Stufenstempel ausgebildet, d. h., sie weist einen scheibenförmigen, unteren Bereich 30a auf, der mit einem ringförmigen Vorsprung 30b versehen ist.

Beim Einfedern dieses Federkörpers 20′ kommt zunächst nur die Grundfläche des scheibenförmigen Bereiches 30a zur Wirkung ; nach einem vorgegebenen Federweg legt sich jedoch der ringförmige Vorsprung 30b auf die Oberfläche des Federkörper 20' auf und bewirkt dort eine weitere Verformung im steilen Bereich der Kennlinie, wie noch erläutert werden soll.

Die Verbindungsschichten 26, 28 haben den Aufbau, wie er für die Herstellung von Gummi/Metall-Verbindungen bekannt ist.

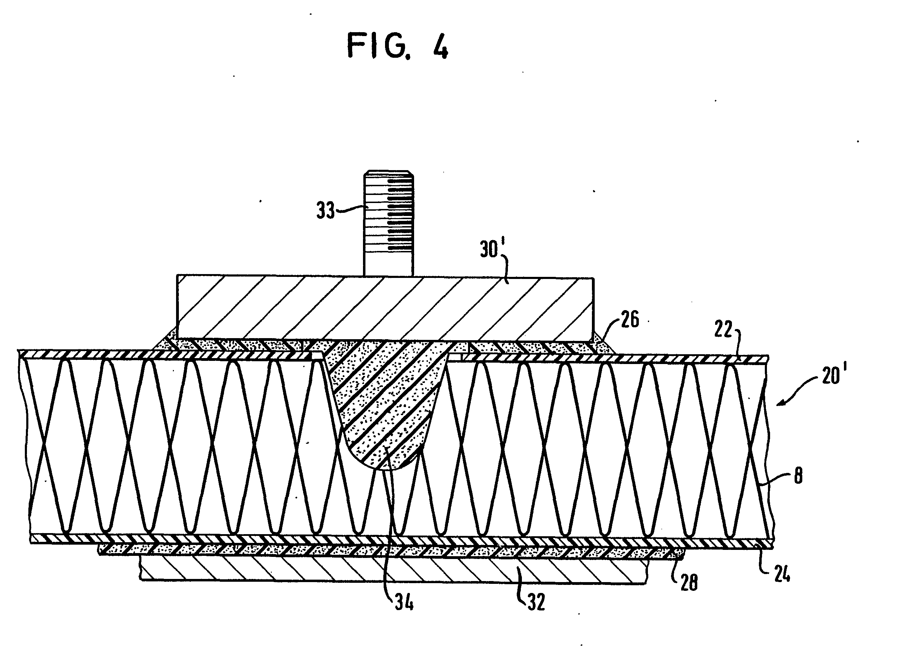

Fig. 4 zeigt schließlich eine Variante des Federkörpers 20', die sich von der Ausführungsform nach Fig. 3 im wesentlichen dadurch unterscheidet, daß die obere Platte 30' mit dem Bolzen 33 nicht als Stufenstempel ausgebildet ist. Stattdessen ist in die obere Verbindungsschicht 26 und die obere Schicht 22 des Federkörpers 20' ein Anschlagpuffer 34 aus festem Gummi und/oder Moosgummi integriert.

Ähnlich wie bei der Ausführungsform nach Fig. 3 federt dieser Federkörper 20' ein, bis der Anschlagpuffer 34 die untere Bahn des Federkörpers 20' berührt und dadurch eine Verformung im steilen Bereich der Kennlinie bewirkt.

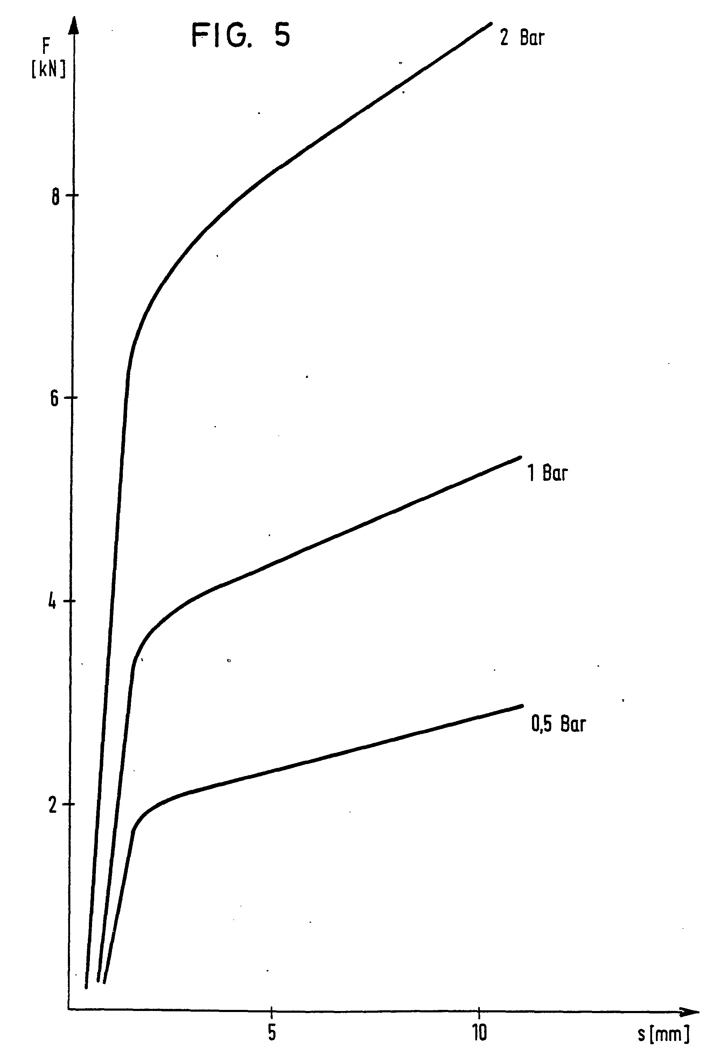

Fig. 5 zeigt die Kraft/Weg-Kennlinie des Federkörpers nach Fig. 1, jedoch ohne Stufenstempel 30, d. h., die obere Metallplatte 30 hat einen konstanten, vorgegebenen Durchmesser.

Es läßt sich erkennen, daß bei der Einwirkung von statischen Kräften die Kennlinie zunächst steil ansteigt und dann in einen « Sättigungsbereich » mit relativ flachem Anstieg übergeht. Der Kurvenverlauf läßt sich durch Verwendung von unterschiedlichen Fülldrücken in weiten Bereichen variieren.

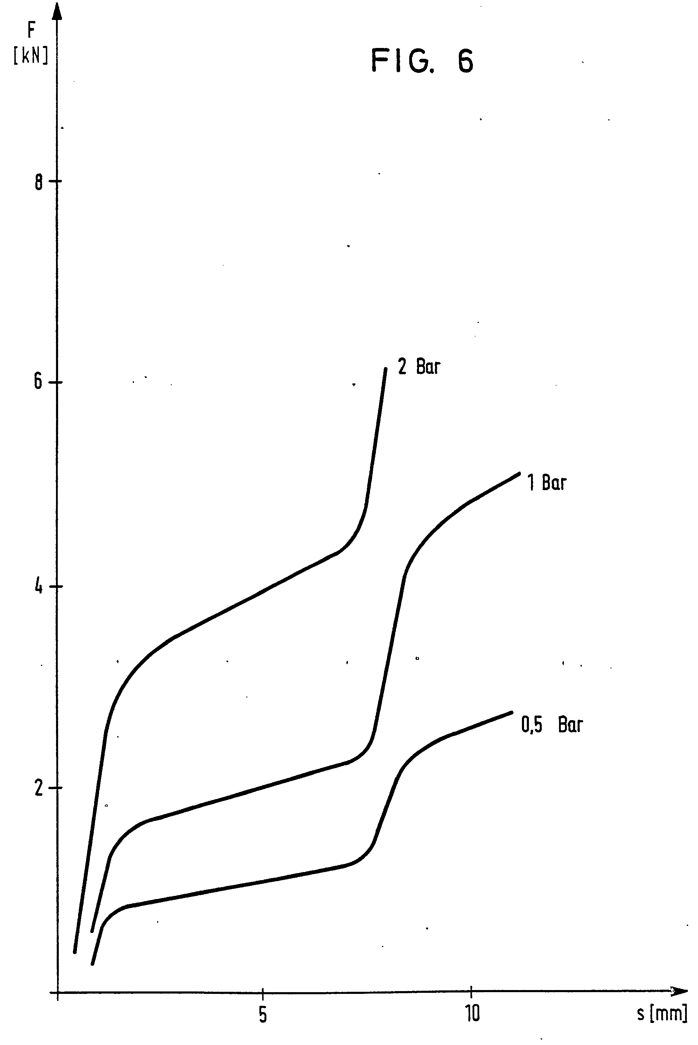

Fig. 6 zeigt schließlich die Kraft/Weg-Kennlinie der Ausführungsform nach Fig. 3, also mit dem Stufenstempel 30. Es läßt sich erkennen, daß sich an den Bereich mit flachem Anstieg wieder ein Bereich mit steilem Anstieg anschließt, wenn der ringförmige Vorsprung 30b in Anlage an die Oberfläche der oberen Schicht 22 kommt und dadurch die für die Kraftübertragung zur Verfügung stehende Fläche größer wird. Auch dieser steile Anstieg geht dann, zumindest bei niedrigen Fülldrücken, in einen relativ flachen Sättigungsbereich über.

## Patentansprüche

1. Federkörper für die Dämpfung von Schwingungen, insbesondere zur Lagerung von Maschinen, mit einem verformbaren, mit Luft gefüllten Hohlkörper (20, 20') und mit einer durch ein Ventil verschließbaren Füllöffnung (15, 15'), dadurch gekennzeichnet, daß der Hohlkörper (20, 20') aus einem mit elastomerem Material luftdicht beschichteten und an den Rändern verschlossenen Doppelgewebe mit planparallelem Ober- und Untergewebe (6, 7) besteht, dessen horizontale Erstreckung ein Mehrfaches seiner axialen Höhe beträgt, und der im aufgeblasenen Zustand eine Lateralsteifigkeit in der Größenordnung der Axialsteifigkeit aufweist, und daß auf der Oberseite und/oder unterseite mindestens eine Metallplatte (30 ; 30'; 32) vorgebbarem Gröenverhältnisses zur Hohlkörperfläche als Verbindungselemente zur Maschine und/oder Fundament aufvulkanisiert sind.

2. Federkörper nach Anspruch 1, dadurch gekennzeichnet, daß das Doppelgewebe aus Polyester, Polyamid oder Aramid besteht.

3. Federkörper nach einem der Ansprüche 1 oder 2, dadurch gekennzeichnet, daß das Doppelgewebe mit Gummi aus Dien-, EPDM-, Natur- oder Butylkautschuk beschichtet ist.

4. Federkörper nach Anspruch 1, dadurch gekennzeichnet, daß zumindest eine Metallplatte (30) als Stufenstempel ausgebildet ist.

5. Federkörper nach Anspruch 1, dadurch gekennzeichnet, daß in den Hohlkörper (20, 20') ein Anschlagpuffer (34) aus massivem und/oder Moosgummi integriert ist.

## Claims

1. Resilient body for damping vibrations, especially for mounting machines, having a deformable hollow body (20, 20') filled with air, and a filling opening (15, 15') closable by a valve, characterised in 5 that the hollow body (20, 20') consists of a two-ply fabric which has plane-parallel upper and lower fabric (6, 7), is coated air-tight with elastomeric material, is closed at the edges, and the horizontal extent of which amounts to a multiple of its axial height, and which in the inflated state has a lateral stiffness of the order of magnitude of the axial stiffness, and in that there is vulcanised onto the top side and/or under side as joining element to the machine and/or foundation at least one metal plate (30 ; 30' ; 32) of predeterminable dimensional ratio to the area of the hollow body.

2. Resilient body according to Claim 1, characterised in that the two-ply fabric consists of polyester, polyamide or aramid.

3. Resilient body according to one of Claims 1 or 2, characterised in that the two-ply fabric is coated with cured rubber from diene rubber, EPDM rubber, natural rubber or butyl rubber.

4. Resilient body according to Claim 1, characterised in that at least one metal plate (30) is constructed as step punch.

5. Resilient body according to Claim 1, characterised in that a stop buffer (34) of solid and/or cellular rubber is ;ntegrated into the hollow body (20, 20').

## Revendications

1. Corps élastique pour l'amortissement des vibrations, notamment pour le montage de machines, comprenant un corps creux (20, 20') déformable et empli d'air et un orifice de remplissage (15, 15') pouvant être fermé par une soupape, caractérisé en ce que le corps creux (20, 20') est en un tissu à double pli, qui est revêtu de manière étanche à l'air d'un matériau élastomère, qui est fermé sur les bords, qui a un pli supérieur (6) et un pli inférieur (7) à faces planes et parallèles, dont l'étendue horizontale représente un multiple de la hauteur axiale et qui, à l'état gonflé, a une rigidité latérale de l'ordre de grandeur de la rigidité axiale, et en ce que sur le côté supérieur et sur le côté inférieur est appliquée par vulcanisation au moins une plaque métallique (30 ; 30' ; 32) de dimensions prescrites par rapport à la surface du corps creux et servant d'élément de liaison à la machine et/ou aux fondations.

2. Corps élastique suivant la revendication 1, caractérisé en ce que le tissu à double pli est en polyester, polyamide ou en aramide.

3. Corps élastique suivant l'une des revendications 1 ou 2, caractérisé en ce que le tissu à double pli est revêtu de gomme en caoutchouc diénique, en caoutchouc en copolymère de polyéthylène, de polypropylène et de poly(diènemonomère), en caoutchouc naturel ou en caoutchouc butyle.

4. Corps élastique suivant la revendication 1, caractérisé en ce que au moins une plaque métallique (30) est constituée en poinçon à gradin.

5. Corps élastique suivant la revendication 1, caractérisé en ce que dans le corps creux (20, 20') est intégré un tampon formant butée (34) en gomme pleine et/ou en gomme mousse.

FIG. 1

FIG. 2

# FIG. 3

EP 0 168 767 B1

FIG. 4

EP 0 168 767 B1

FIG. 5

FIG. 6